# EUROPEAN PATENT SPECIFICATION

(11) **EP 3 267 274 B1**
(45) Date of publication and mention of the grant of the patent: **13.05.2020**
(21) Application number: 15883851.6
(22) Date of filing: 02.03.2015
(51) Int. Cl.: G05B 23/00, F16K 37/00, G01L 5/00, F16K 5/06

(54) **SYSTEM FOR THE PREDICTIVE MAINTENANCE OF VALVES AND METHOD FOR CARRYING OUT SAID MAINTENANCE**
SYSTEM ZUR PRÄDIKTIVEN WARTUNG VON VENTILEN UND VERFAHREN ZUM DURCHFÜHREN DER BESAGTEN WARTUNG
SYSTÈME DE MAINTENANCE PRÉDICITIVE DE VANNES ET PROCÉDÉ DE RÉALISATION DE LADITE MAINTENANCE

(43) Date of publication of application: 10.01.2018
(73) Proprietor: AMPO, S. COOP., E-20213 Idiazabal (Guipúzcoa) (ES)
(72) Inventor: GALARZA OLANO, Eneko, 20213 Idiazabal (Guipúzcoa) (ES); GAINZARAIN HERIZ, Harkaitz, 20213 Idiazabal (Guipúzcoa) (ES); ARAMENDIA AUZA, Jon, 20213 Idiazabal (Guipúzcoa) (ES); UNANUE ESTENSORO, Aitor, 20213 Idiazabal (Guipúzcoa) (ES); COLOMO ZULAIKA, Leire, 20213 Idiazabal (Guipúzcoa) (ES)
(74) Representative: Herrero & Asociados, S.L.
(86) International application number: PCT/ES2015/070150
(87) International publication number: WO 2016/139376

(56) References cited:
- EP-A1- 2 792 919
- EP-A2- 0 315 391
- WO-A1-95/06276
- WO-A1-95/06276
- US-A- 4 364 111
- US-A- 4 364 111
- US-A- 5 722 286
- US-A- 5 931 044
- US-A1- 2001 048 301
- US-A1- 2003 136 929
- US-A1- 2004 128 033
- US-A1- 2004 128 033
- US-A1- 2008 034 882
- US-B2- 7 174 795

## Description

### TECHNICAL FIELD OF THE INVENTION

The invention relates both to a system and a method for carrying out the predictive maintenance of valves of the type used for regulating the passage of a fluid.

More specifically, the invention aims to detect possible malfunctions in the valves while they are still maneuverable, thus enabling to program the necessary actions for the repair or replacement thereof, avoiding unscheduled shutdowns in the installations.

### BACKGROUND OF THE INVENTION

Mechanical valves or devices for controlling fluids are very well known in the state of the art, having a multitude of uses such as opening and closing, connecting and disconnecting, regulating, modulating or isolating said fluids, etc., giving rise to flow control valves, pressure control valves, directional control valves or combinations of several of these.

Valves find their greatest scope of application at the industrial level, being essential and present in an infinite number of systems, practically in all those that work with fluids, regardless of the nature thereof, whether they are toxic or not, or whether they are liquids or gases. Likewise, depending on the application, the fluid and the conditions thereof, valves have a multitude of sizes, ranging from a few millimeters to several meters in diameter.

Likewise, depending on the sector of the industry and the application and conditions of the fluid they regulate, they can be subjected to pressures ranging from a vacuum to more than 100 MPa, or to temperatures ranging from cryogenic to more than 1000°K.

It follows that the importance of the correct operation of these valves, many of which are also installed in critical locations because of the danger they involve and the importance of the fluid they supply to people or facilities.

More specifically, one of the most serious malfunctions that can occur in flow control valves, among which there are types such as ball, gate, globe, or butterfly valves, etc., is the loss of the maneuverability thereof, which can be due, among other reasons, to the following:
- Malfunction of the actuator,
- Malfunction of the reducer,
- Damaged seats,
- Damaged ball,
- Impurities of the fluid that passes through the valve,
- Mechanical fracture.
It is therefore fundamental to carry out suitable maintenance in this type of devices in order to minimize the impact resulting from the rupture or malfunction of one of these valves.

Thus, currently, once a breakdown occurs, corrective maintenance is attempted as quickly and as efficiently as possible, which results in economic savings and better management of the system supply service in which the damaged valve is installed.

Simultaneously, preventive maintenance is carried out consisting of the periodic inspection of these valves, as well as the cleaning or replacement thereof after a stipulated number of hours of operation, thus preventing breakdowns, in other words, anticipating problems arising from the wear and tear due to the use thereof, close to the end of their estimated useful life.

These systems, however, continue suffering from a series of disadvantages such as, depending on the level of safety and the requirements of the system, the high maintenance costs either due to the programming of the revisions or to changing or replacing parts that are still in good relative condition.

We must also add the fact that even while carrying out preventive maintenance, sometimes breakdown also occurs due to external factors inherent to the channeled fluid, bad weather conditions or other conditions derived from the installation site of said valves.

Last but not least, the greatest problem these types of maintenance entail is the fact that they do not provide very reliable information about the causes that have caused a malfunction nor do they allow for establishing a case study or analysis that enables predicting future malfunctions.

WO9506276 (A1) relates to a valve positioner (50) receives a set point from a master (62) and provides a control pressure to a valve actuator (70) for controlling a valve (72).

US5722286 (A) relates to A torque/position transducer is positioned between the valve stem of a valve and a valve operator adapted to open and close the valve and includes a body section including an input lug adapted for mating the engagement with the output lug of the valve operator and an output lug adapted for mating the engagement with the valve stem of the valve.

US2004128033 (A1) relates to a valve actuator with an embedded integrated chip. Said valve actuator can be connected directly to the Internet so as to achieve the object of dispersed controlling.

EP0315391 (A2) relates to an online valve monitoring system to monitor valve operation and sense the wear senses operational characteristics of a valve and provides a diagnosis of aberrations in the characteristics.

EP2792919 (A1) relates to an apparatus and associated methods relate to an autonomous controllable valve system for providing turbulent flow to a cleaning solution during a valve-cleaning operation.

### DESCRIPTION OF THE INVENTION

The system for the predictive maintenance of valves of the present invention resolves the aforementioned drawbacks of the prior art insofar as it enables, on the one hand, anticipating a possible valve malfunction before it occurs and, on the other hand, recognizing behavior patterns that are useful for predicting future malfunctions.

Thus, the system of the invention enables increasing durability of the valves, reducing maintenance costs, obtaining criteria for the improvement of said valves or of the mode of operation thereof, further enabling to automatically send reports and alarms on the operation of the valves, as will be seen later on.

For this purpose, the system of the invention comprises two different types of sensors, for torque and position, as well as means for processing the signals obtained through said sensors capable of obtaining the torque-position curves in order to be able to deduce, from the evolution of said curves, possible defects that could make repair necessary.

On the other hand, the method of the invention comprises the stages of:
- Fastening position signaling means detectable by the position sensor such that said sensor can establish the position of the valve spindle, including limit switches in order to detect the start and the end of the valve maneuver, respectively;
- Acquiring and recording the position and torque signals from a time before the start of travel, which signals the start of the maneuver, changes state, in other words, the system is continuously acquiring data and when a movement is detected, the seconds previous to it are saved, all of this without interfering with the control of the actuator and/or reducer.

- Acquiring and recording the position and torque signals during rotation of the valve;
- Acquiring and recording the position and torque signals until a time after the limit switch signals the end of the maneuver;
- Processing the signals obtained and, when appropriate,
- Sending the data to a remote station for analysis.
Schematically expressed, the system of the invention obtains the relevant information from the torque and position sensors, records them on a memory card and, if necessary, sends said data to the control center.

Furthermore, this is carried out such that each maneuver is recorded, including partial travel maneuvers, without interfering in the control and maneuvering of the valves, these being a system that is independent from the actuation system.

Thus, the system and method of the invention enable first recording and then recognizing behavior patterns of the torque-position curves, which result in being able to anticipate valve malfunctions before they occur, carrying out effective and efficient predictive maintenance thereof.

Finally, and as will be seen further on in the practical exemplary embodiment, due to the independence thereof from the actuator and/or reducer of the valve, whether manual or automatic, the system of the invention enables the installation thereof in already existing valves. This entails an obvious economic advantage for those installations in which one wishes to start monitoring the operation, especially in critical applications such as, among others, mining valves or valves for safety systems, such as, for example, High Integrity Pressure Protection System (HIPPS) valves.

This independence of the valves themselves enables in turn a wide versatility, since the system can be adapted, for example, depending on the characteristics of the installation or the customer's expectations.

In the case of isolated valves where there is no available electricity source, the system is prepared so that maintenance workers can connect a laptop computer or other device external to the system, carry out test maneuvers and store the torque-position data in the computer so that the behavior patterns can be analyzed and abnormal operations can be detected.

In the case where the valve is located in a remote location, which does have power supply but no Internet connection, the data from the maneuvers of the valves are recorded on an SD-type or similar storage card such that the maintenance workers can download the information from said card when they wish or directly replace the card with an empty one.

Finally, in the event that the valve or valves to be monitored are located in a remote location but having power supply and Internet connection, the system of the invention may be installed including the necessary means for sending the data to a remote control post.

### DESCRIPTION OF THE DRAWINGS

As a complement to the description provided herein, and for the purpose of helping to make the characteristics of the invention more readily understandable, in accordance with a preferred practical embodiment thereof, said description is accompanied by a set of figures constituting an integral part of the same, which by way of illustration and not limitation represent the following:
Figure 1 shows a cross-sectional elevation view of a possible valve to which the system of the invention has been coupled.
Figure 2 shows a perspective view of the tube placed on the interspaced extension between the actuator and the spindle of the valve containing the protection of the strain gauges and on which the magnets are placed.
Figure 3 shows another perspective view of the tube of the previous figure wherein the magnets are seen more clearly and wherein a possible practical embodiment of the position sensor also appears.
Figure 4 shows a schematic view on the way the position sensor carries out the reading.

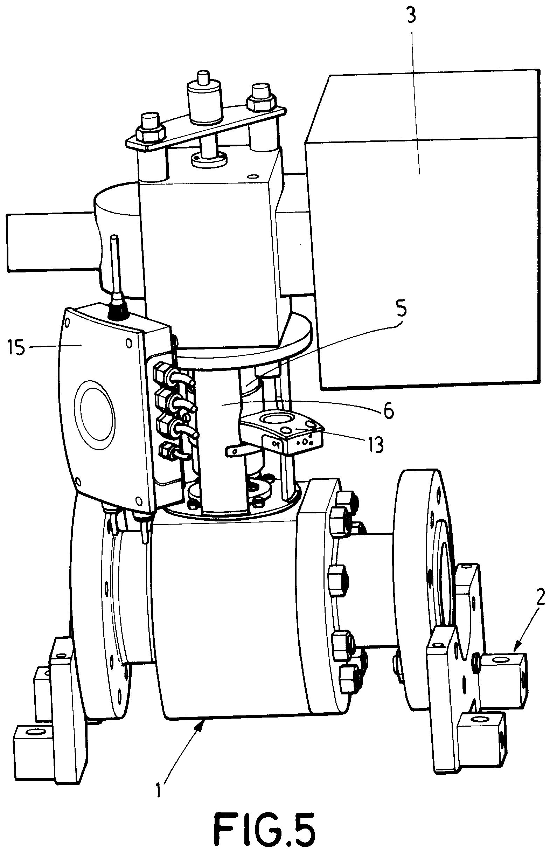

Figure 5 finally shows a perspective view of the valve assembly of Figure 1 wherein the main elements of the system of the present invention are included.

### PREFERRED EMBODIMENT OF THE INVENTION

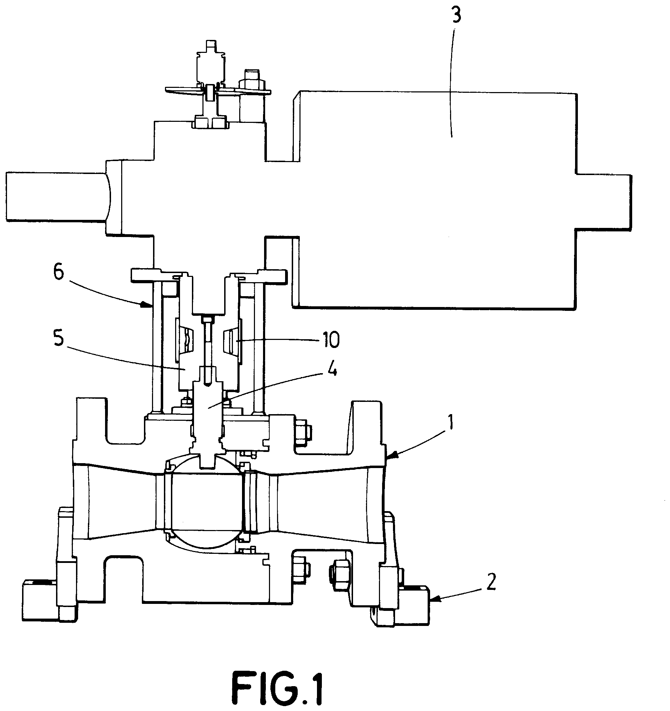

In view of the above-mentioned figures, a preferred embodiment of the system for the predictive maintenance of valves can be seen such as, for example, that shown in Figure 1, which reproduces an elevational view of a conventional ball-type valve to which a cross-section has been applied so that the fundamental elements thereof, as well as a few of the elements of the invention, can be seen.

Specifically, said Figure 1 basically shows a conventional valve assembly wherein the body (1) of the valve can be seen along with the support (2), the actuator (3), in this case automated but which in other embodiments could be manual like a steering wheel or the like, as well as a reducer, or both, actuator and reducer, the spindle (4) and, mounted on the latter or forming part of it in another possible embodiment, an extension (5) on which the different sensors will take the torque and position measurements, as well as a supplement (6) on which some elements of the system of the invention will be mounted.

More specifically, the system of the invention comprises at least one torque sensor that, according to a preferred embodiment of the invention, is made up of strain gauges (7) connected to the extension (5) on one side and to a sensor board (not shown) on the other.

Said strain gauges (7), are widely tested elements that are known to be based on the piezoresistive effect or piezoresistivity, which is the property of some materials, conductors and semiconductors, whereby their electrical resistivity changes when subjected to mechanical strain or effort, either traction or compression, that deforms them.

Thus, in the embodiment of the described invention, the strain gauges (7) are placed on the extension (5) of the valve spindle (4), so that the torque necessary to actuate the valve that must be applied to the spindle (4), through the actuator (3), passes through said gauges, which provide an electrical signal proportional to said torque that is delivered to the sensor board.

On the other hand, the position measurement is carried out through at least one position sensor (8), which according to a preferred embodiment of the invention will be magnetoresistive, in other words, of the type based on the property of a material that changes its resistivity in the presence of an external magnetic field, of special application for measuring angular and/or rotational velocity.

For this purpose, conventional magnetoresistive-type sensors can be used, however, in light of the impossibility of placing them in an axial position with respect to the spindle (4) due to the structure of the valve itself, the present invention uses a radial arrangement, which is commented below.

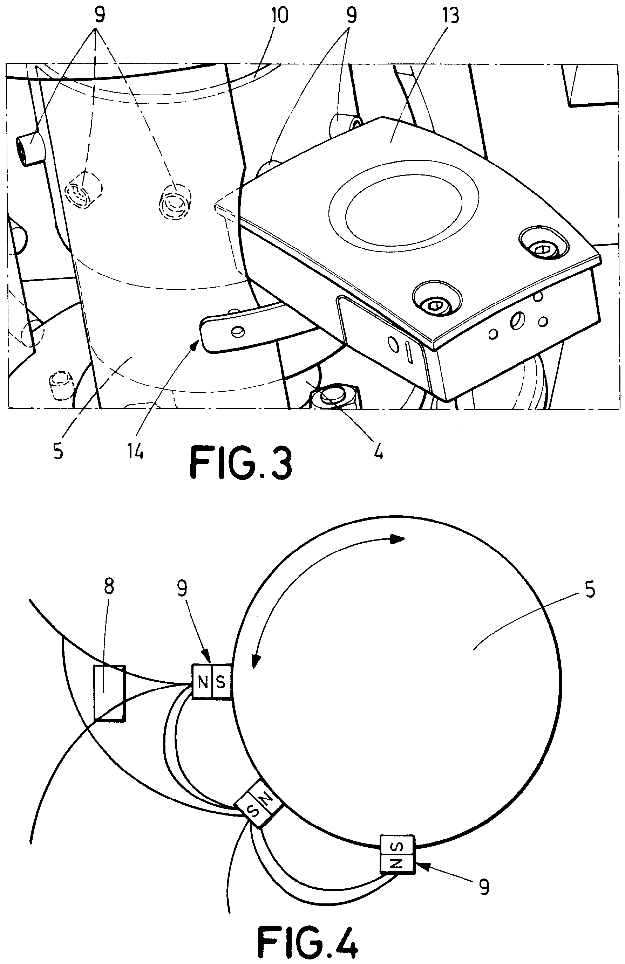

Thus, according to a possible embodiment of the invention shown schematically in Figure 3, the sensor is placed in radial position with respect to the valve spindle (4) and, consequently, to the extension (5), which will have a series of magnets (9) with alternating polarity on the surface thereof, equiangularly distributed so as to cover the desired angular distance, for example every 35°.

Thus, on actuating the actuator (3), the latter will rotate the spindle (4) at a certain angle and therefore also the extension (5) on which the magnets (9) are jointly placed, which will pass in front of the position sensor (8), placed at the same height thereof, which will measure the direction of the magnetic field created by the moving magnets (9) and transform it into an electrical signal that will subsequently be transferred to the sensor board, which according to a possible embodiment shown in Figure 3, is placed in a radial arrangement with respect to the spindle (4).

Additionally, according to another possible practical embodiment, the system may comprise additional magnets for determining end of travel, for example, two reed-type switches, specifically limit switches, which mark the start and the end of the valve maneuver, respectively.

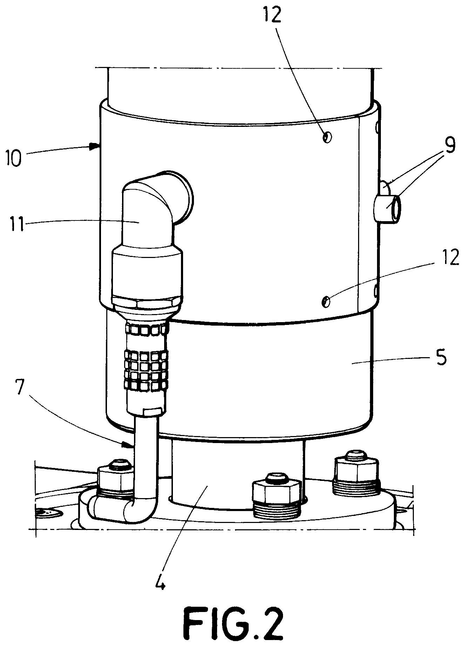

On the other hand, according to a possible embodiment of the invention, specifically shown in Figures 2 and 3, the extension (5) has a tubular coating (10) fastened to the surface thereof, which covers it at least partially, and on which at least one protecting hollow elbow (11) and a hose are assembled for guiding the wires of the strain gauges (7), which run through the interior thereof and thus are protected until they are connected to the extension (5).

Furthermore, the magnets (9) can be placed on said tubular coating (10), either screwed, inserted into holes or by any other known method, which ensures that they do not experience undesired movements.

According to a possible embodiment, said tubular coating (10) has two half-tube shaped portions, each of which has through holes (12) in the corners thereof for fastening to the extension (5) by means of screws or the like.

It goes without saying that both the tubular coating (10) and the elbow (11) have a structure and arrangement such that they do not impede or interfere with the angular movement of the extension (5) and hence of the spindle (4).

On the other hand, and as seen in the figures, especially in numbers 3 and 5, the position sensor (8) is protected inside a box (13) which is attached by means of a support (14) to the supplement (6) such that it is perfectly facing the magnets (9) for a correct reading. To this end, said support has a platen (not shown) on which the lower portion of the box (13) is fastened through adjustable means that will enable varying the anchoring position of said box (13) in order to adjust the distance from the position sensor (8) to the magnets.

Likewise, the system of the invention comprises a main board which may be protected inside a second box (15), which will be joined by removable means to the supplement (6) such that it is possible to release said second box (15) without the need to separate the supplement (6) from the actuator (3) or from the rest of the assembly, thereby enabling removal, replacement or maintenance of said main board without interfering with any valve element. Furthermore, this main board will be connected either by wires or wirelessly to an Ethernet communication board (not shown), which can collect data from one or more valves and store the information in a suitable support, such as an SD card, and/or send the information to the control center, as the case may be.

Finally, according to a possible practical embodiment, the system of the invention will also comprise a temperature sensor, which enables correcting the variations that the measurements of the torque (strain gauges (7)) and position (8) sensors can experience due to the extreme temperature values thereof, and which will be connected to the sensor board.

As mentioned above, the sensor board, the main board, an Ethernet-type communications board and, optionally, an I/O board will take care of the management of all of these elements. More specifically, these boards will have the following functions:
Sensor board:
   - Identification of the board and tracking: it stores the identification number and the manufacturing and calibration dates in the memory.
   - Data acquisition and conditioning:
      ∘ Digitizing the signals coming from the sensors. For an exemplary embodiment, the acquisition rate is estimated to be configurable between 5 and 200 samples per second.
      ∘ Scaling the electrical signals received from the sensors to engineering units (Newton*m, °C and % of valve rotation).
      ∘ Based on the data obtained from the position sensor (8), determining, via an algorithm implemented in the appropriate software, the position of the spindle (4) at any given moment from the maneuver, ideally more accurate than 1°.
      ∘ Sending the measured values of temperature, torque and position to the main board, where said position calculation is carried out once the maneuver is completed.
Main board:
   - Detecting when a maneuver has started and storing the corresponding data in the memory thereof until they are read by means of USB, Ethernet or radio.
   - Recording the moment the maneuver was carried out (year/month/day/hour/minutes/seconds).
I/O Board:
   - Optionally, it can be connected to the main board and provides the possibility of having inputs (digital and analog) and outputs (digital).
Ethernet Board:
   - Connecting to the associated main boards, extracting the maneuver data from them and storing them or sending them to a PC using an Ethernet port.
   - Carrying out date and time synchronization, periodically sending this data to the associated main boards.

On the other hand, according to a preferred embodiment of the invention, a method for carrying out preventive maintenance on valves comprises the stages of:
- Associating at least one torque sensor to the valve spindle (4) so that it detects the torque needed for actuating said valve through the actuator and provides an electrical signal proportional to said torque.
- Associating at least one position sensor (8) to the valve spindle (4) such as to detect both the start and end of travel positions of said spindle (4) as well as the intermediate positions thereof.
- Acquiring and recording the position and torque signals from a time before the start of travel, which signals the start of the maneuver, changes state.
- Acquiring and recording the position and torque signals during rotation of the valve;
- Acquiring and recording the position and torque signals up to a time after the limit switch signals the end of the maneuver;
- Once the maneuver has ended, processing the signals obtained and calculating, by means of a suitable algorithm, the position at any given moment moment based on the signals from the two sensors and the start and end of travel status, and, if applicable,
- Sending the data to a remote station for analysis.

According to a preferred embodiment, the time before, during which the torque and position signals are acquired and recorded prior to the maneuver, is 5 seconds, Likewise, the time that elapses after the end of the maneuver, during which the torque and position signals are acquired and recorded, is also 5 seconds. This adjustable time is that which is estimated sufficient for ensuring that the system records both the maximum and minimum torque once the end of the maneuver has been signaled, since said torque does not take place at the exact time indicated by the sensor due to the change in the positions themselves according to the torque applied and other external factors such as the temperature, etc.

Furthermore, the data sent for analysis will consist of a file, which will contain the following data for each valve maneuver:
- Identification of the valve (serial number or the like)
- Date and time of the maneuver.
- Type of maneuver (complete or incomplete if the limit position has not been reached and the maximum number of samples has been exceeded).
- Torque-position data.
This file will have an identifying name, for example, the serial number of the valve + the date and time of the maneuver.

Subsequently, through the corresponding software, it will be possible to:
- Extract the maneuver data for each of the valves of a plant, either for only one sample or for valves whose operation is critical.
- Store this data in different databases,
- Display the evolution in time of the torque and position curves of each of the valves, and
- Analyze whether the evolution of said curves is correct and, if it is not, generate the corresponding warning signal in order to detect a possible future breakdown.

## Claims

1. A system suitable for the predictive maintenance of valves comprising a body (1), a support (2) and a spindle (4) for actuating a valve,
it further comprises:
- at least one torque sensor for measuring the actuation torque to actuate the valve exerted on the spindle (4);
- at least one position sensor (8) for measuring the angular position of said valve;
- a sensor board responsible for acquiring and processing the signals from the sensors; and
**characterized in that** the system comprises a temperature sensor connected to the sensor board for correcting the variations that the measurements of the position (8) and torque sensors can experience due to the extreme temperature values thereof.

2. The system for the predictive maintenance of valves according to claim 1, **characterized in that** it comprises two limit switches detectable by the position sensor (8), which mark the start and the end of the valve maneuver, respectively.

3. The system for the predictive maintenance of valves according to any of the preceding claims **characterized in that** it comprises an extension (5) mounted on the spindle (4) of the valve.

4. The system for the predictive maintenance of valves according to claim 3, **characterized in that** the torque sensor is made up of strain gauges (7) connected to the extension (5) on one side and to the sensor board on the other.

5. The system for the predictive maintenance of valves according to claim 3 or 4, **characterized in that** the position sensor (8) is of the magnetoresistive-type and is placed in a radial position with respect to the extension (5), at the same height as a series of magnets (9) with alternating polarity, equiangularly distributed on the surface of said extension (5), such that the position sensor (8) measures the direction of the magnetic field created by the magnets (9) as the extension (5) rotates, and delivers it to the sensor board as an electrical signal.

6. The system for the predictive maintenance of valves according to Claim 5, **characterized in that** the extension (5) has a tubular coating (10) fastened to the surface thereof, covering it at least partially, and on which the magnets (9) are mounted, as well as at least one hollow elbow (11) for protecting and guiding the wires of the strain gauges (7).

7. The system for the predictive maintenance of valves according to any of the preceding claims **characterized in that** the position sensor (8) is protected inside a box (13) which is attached to the valve by means of a support (14) having a platen on which the lower portion of the box (13) is fastened through adjustable means enabling to vary the anchoring position of said box (13) in order to adjust the distance from the position sensor (8) to the magnets (9).

8. The system for the predictive maintenance of valves according to any of the preceding claims **characterized in that** it comprises a main board that stores and processes the data it receives from the sensor board.

9. The system for the predictive maintenance of valves according to claim 8 **characterized in that** the main board is protected inside a second box (15), which is joined by removable means to a supplement (6) of the system, such that it is possible to release said second box (15) without interfering with any valve element.

10. The system for the predictive maintenance of valves according to claim 8 **characterized in that** it comprises an Ethernet board connected to the main board for sending the data extracted from it.

11. The system for the predictive maintenance of valves according to any of the preceding claims **characterized in that** it comprises an I/O board with digital and analog inputs and digital outputs connected to the main board.

12. A method for carrying out predictive maintenance on valves, **characterized in that** it comprises the stages of:
- Associating at least one torque sensor to a valve spindle (4) so that it detects the torque needed for actuating said valve and provides an electrical signal proportional to said torque;
- Associating at least one position sensor (8) to the valve spindle (4) such as to detect both the start and end of travel positions of said spindle (4) as well as the intermediate positions thereof;
- Acquiring and recording the position and torque signals from a time before the start of travel, which signals the start of a maneuver,
- Acquiring and recording the position and torque signals during rotation of the valve;
- Acquiring and recording the position and torque signals up to a time after a limit switch signals the end of the maneuver; and
- Once the maneuver has ended, processing the signals obtained and calculating the position at any given moment based on the signals from the two sensors and the start and end of travel status, wherein processing the signals obtained comprises correcting the variations that the measurements of the position (8) and torque sensors can experience due to the extreme temperature values thereof with a temperature sensor connected to the sensor board.

13. The method for carrying out predictive maintenance in valves according to claim 12, **characterized in** sending the data to a remote station for analysis.

14. The method for carrying out predictive maintenance in valves according to any of claims 12 or 13, **characterized in that** the time before, during which the torque and position signals are acquired and recorded prior to the maneuver or after the end of the maneuver, is sufficient for ensuring that a system records both the maximum and minimum torque once said maneuver is carried out.

15. The method for carrying out predictive maintenance in valves according to any of claims 12 to 14, **characterized in that** a file is generated for each maneuver, comprising:
- Identification of the valve;
- Date and time of the maneuver;
- Type of maneuver; and
- Torque-position data.

16. The method for carrying out predictive maintenance in valves according to claim 15, **characterized in that** the generated file is processed through software in order to:
- Extract the maneuver data for each of the valves of a plant,
- Store this data in different databases,
- Display the evolution in time of the torque and position curves of each of the valves, and
- Analyze whether the evolution of said curves is correct and, if it is not, generate the corresponding warning signal in order to detect a possible future breakdown.

## Patentansprüche

1. System, das für die vorausschauende Wartung von Ventilen geeignet ist, umfassend einen Körper (1), einen Träger (2) und eine Spindel (4) zum Betätigen eines Ventils,
wobei es ferner umfasst:
- mindestens einen Drehmomentsensor zum Messen des Betätigungsmoments, um das Ventil zu betätigen, das auf die Spindel (4) ausgeübt wird;
- mindestens einen Positionssensor (8) zum Messen der Winkelposition des Ventils;
- eine Sensorplatine, die zum Erfassen und Verarbeiten der Signale von den Sensoren verantwortlich ist; und
**dadurch gekennzeichnet, dass** das System einen Temperatursensor umfasst, der mit der Sensorplatine zum Korrigieren der Schwankungen verbunden ist, welche bei Messungen des Positions- (8) und Drehmomentsensors aufgrund der extremen Temperaturwerte davon auftreten können.

2. System für die vorausschauende Wartung von Ventilen nach Anspruch 1, **dadurch gekennzeichnet, dass** es zwei Endschalter umfasst, die durch den Positionssensor (8) erfassbar sind, die jeweils den Start und das Ende des Ventilmanövers kennzeichnen.

3. System für die vorausschauende Wartung von Ventilen nach einem der vorhergehenden Ansprüche, **dadurch gekennzeichnet, dass** es einen Fortsatz (5) umfasst, der auf der Spindel (4) des Ventils montiert ist.

4. System für die vorausschauende Wartung von Ventilen nach Anspruch 3, **dadurch gekennzeichnet, dass** der Drehmomentsensor aus Dehnungsmessern (7) aufgebaut ist, die mit dem Fortsatz (5) auf einer Seite und mit der Sensorplatine auf der anderen verbunden sind.

5. System für die vorausschauende Wartung von Ventilen nach Anspruch 3 oder 4, **dadurch gekennzeichnet, dass** der Positionssensor (8) vom magnetoresistiven Typ ist und in einer radialen Position in Bezug auf den Fortsatz (5) platziert ist, auf der gleichen Höhe wie eine Reihe von Magneten (9) mit abwechselnder Polarität, gleichwinklig über die Oberfläche des Fortsatzes (5) verteilt, sodass der Positionssensor (8) die Richtung des Magnetfelds misst, das durch die Magneten (9) erzeugt wird, wenn sich der Fortsatz (5) dreht, und sie an die Sensorplatine als elektrisches Signal liefert.

6. System für die vorausschauende Wartung von Ventilen nach Anspruch 5, **dadurch gekennzeichnet, dass** der Fortsatz (5) eine rohrförmige Beschichtung (10), die an der Oberfläche davon befestigt ist, sie zumindest teilweise abdeckt, und auf welcher die Magneten (9) montiert sind, sowie mindestens einen hohlen Krümmer (11) zum Schützen und Führen der Drähte der Dehnungsmesser (7) aufweist.

7. System für die vorausschauende Wartung von Ventilen nach einem der vorhergehenden Ansprüche, **dadurch gekennzeichnet, dass** der Positionssensor (8) im Inneren eines Kastens (13) geschützt ist, welcher an dem Ventil mittels eines Trägers (14) angebracht ist, der eine Platte aufweist, auf welcher der untere Abschnitt des Kastens (13) durch einstellbare Mittel befestigt ist, die es ermöglichen, die Verankerungsposition des Kastens (13) zu verändern, um den Abstand von dem Positionssensor (8) zu den Magneten (9) einzustellen.

8. System für die vorausschauende Wartung von Ventilen nach einem der vorhergehenden Ansprüche, **dadurch gekennzeichnet, dass** es eine Hauptplatine umfasst, welche die Daten speichert und verarbeitet, die sie von der Sensorplatine empfängt.

9. System für die vorausschauende Wartung von Ventilen nach Anspruch 8, **dadurch gekennzeichnet, dass** die Hauptplatine im Inneren eines zweiten Kastens (15) geschützt ist, welcher durch entfernbare Mittel mit einem Zusatz (6) des Systems verbunden ist, sodass es möglich ist, den zweiten Kasten (15) freizugeben, ohne jegliche Ventilelemente zu beeinträchtigen.

10. System für die vorausschauende Wartung von Ventilen nach Anspruch 8, **dadurch gekennzeichnet, dass** es eine Ethernet-Platine umfasst, die mit der Hauptplatine zum Senden der aus ihr extrahierten Daten verbunden ist.

11. System für die vorausschauende Wartung von Ventilen nach einem der vorhergehenden Ansprüche, **dadurch gekennzeichnet, dass** es eine I/O-Platine mit digitalen und analogen Eingängen und digitalen Ausgängen umfasst, die mit der Hauptplatine verbunden ist.

12. Verfahren zum Ausführen einer vorausschauenden Wartung an Ventilen, **dadurch gekennzeichnet, dass** es die Stufen umfasst:
- Zuordnen von mindestens einem Drehmomentsensor zu einer Ventilspindel (4), sodass er das Drehmoment erfasst, welches zum Betätigen des Ventils notwendig ist, und ein elektrisches Signal bereitstellt, das proportional zu dem Drehmoment ist;
- Zuordnen von mindestens einem Positionssensor (8) zu der Ventilspindel (4), sodass er sowohl den Start als auch das Ende von Bewegungspositionen der Spindel (4) sowie ihre Zwischenpositionen erfasst;
- Erfassen und Aufzeichnen der Positions- und Drehmomentsignale ab einer Zeit vor dem Start einer Bewegung, die den Start eines Manövers signalisiert;
- Erfassen und Aufzeichnen der Positions- und Drehmomentsignale während einer Drehung des Ventils;
- Erfassen und Aufzeichnen der Positions- und Drehmomentsignale bis zu einer Zeit, nach der ein Endschalter das Ende des Manövers signalisiert; und
- sobald das Manöver beendet ist, Verarbeiten der Signale, die erhalten wurden, und Berechnen der Position zu einem beliebigen gegebenen Moment, basierend auf den Signalen von den zwei Sensoren und dem Start und Ende eines Bewegungsstatus,
wobei ein Verarbeiten der Signale, die erhalten wurden, ein Korrigieren der Schwankungen, welche bei Messungen des Positions- (8) und Drehmomentsensors aufgrund der extremen Temperaturwerte davon auftreten können, mit einem Temperatursensor, welcher mit der Sensorplatine verbunden ist, umfasst.

13. Verfahren zum Ausführen einer vorausschauenden Wartung in Ventilen nach Anspruch 12, **gekennzeichnet durch** Senden der Daten an eine entfernte Station zur Analyse.

14. Verfahren zum Ausführen einer vorausschauenden Wartung in Ventilen nach einem der Ansprüche 12 oder 13, **dadurch gekennzeichnet, dass** die Zeit davor, während der die Drehmoment- und Positionssignale vor dem Manöver oder nach dem Ende des Manövers erfasst und aufgezeichnet werden, ausreicht, um sicherzustellen, dass ein System sowohl das maximale als auch das minimale Drehmoment aufzeichnet, sobald das Manöver ausgeführt wird.

15. Verfahren zum Ausführen einer vorausschauenden Wartung in Ventilen nach einem der Ansprüche 12 bis 14, **dadurch gekennzeichnet, dass** eine Datei für jedes Manöver erzeugt wird, umfassend:
- Identifizierung des Ventils;
- Datum und Uhrzeit des Manövers;
- Typ des Manövers; und
- Drehmoment-Position-Daten.

16. Verfahren zum Ausführen einer vorausschauenden Wartung in Ventilen nach Anspruch 15, **dadurch gekennzeichnet, dass** die erzeugte Datei durch Software verarbeitet wird, um:
- die Manöverdaten für jedes der Ventile einer Anlage zu extrahieren,
- diese Daten in unterschiedlichen Datenbanken zu speichern,
- die Entwicklung im Laufe der Zeit der Drehmoment- und Positionskurve jedes der Ventile anzuzeigen, und
- zu analysieren, ob die Entwicklung der Kurven korrekt ist, und, falls sie es nicht ist, das entsprechende Warnsignal zu erzeugen, um einen möglichen zukünftigen Ausfall zu erfassen.

## Revendications

1. Système propre à l'entretien prédictif de vannes, comprenant un corps (1), un support (2) et une broche (4) d'actionnement d'une vanne,
il comprend, en outre :
- au moins un capteur de couple pour mesurer le couple d'actionnement pour actionner la vanne appliqué à la broche (4) ;
- au moins un capteur (8) de position pour mesurer la position angulaire de la vanne ;
- une plaquette de capteur propre à acquérir et à traiter les signaux des capteurs ; et
**caractérisé en ce que** le système comprend un capteur de température relié à la plaquette de capteur pour corriger les variations que les mesures des capteurs de position (8) et de couple peuvent subir en raison de leurs valeurs extrêmes de température.

2. Système d'entretien prédictif de vanne suivant la revendication 1,
**caractérisé en ce qu'**il comprend deux interrupteurs de limite détectables par le capteur (8) de position, qui marquent le début et la fin de la manœuvre de la vanne, respectivement.

3. Système d'entretien prédictif de vanne suivant l'une quelconque des revendications précédentes,
**caractérisé en ce qu'**il comprend une rallonge (5) montée sur la broche (4) de la vanne.

4. Système d'entretien prédictif de vanne suivant la revendication 3,
**caractérisé en ce que** le capteur de couple est constitué de jauges (7) de contrainte connectées à la rallonge (5) d'une part et à la plaquette de capteur d'autre part.

5. Système d'entretien prédictif de vanne suivant la revendication 3 ou 4,
**caractérisé en ce que** le capteur (8) de position est du type magnétorésistif et est placé dans une position radiale par rapport à la rallonge (5), à la même hauteur qu'une série d'aimants (9) de polarité alternée, répartis équiangulairement à la surface de la rallonge (5), de manière à ce que le capteur (8) de position mesure la direction du champ magnétique créé par les aimants (9), alors que la rallonge (5) tourne, et l'envoie à la plaquette de capteur sous la forme d'un signal électrique.

6. Système d'entretien prédictif de vanne suivant la revendication 5,
**caractérisé en ce que** la rallonge (5) a un revêtement (10) tubulaire fixé à sa surface, la recouvrant, au moins en partie, et sur lequel les aimants (9) sont montés, ainsi qu'au moins un coude (11) creux pour protéger et guider le fils des jauges (7) de contrainte.

7. Système d'entretien prédictif de vanne suivant l'une quelconque des revendications précédentes,
**caractérisé en ce que** le capteur (8) de position est protégé en étant à l'intérieur d'une boîte (13), qui est fixée à la vanne au moyen d'un support (14) ayant une platine, sur laquelle la partie inférieure de la boîte (13) est fixée par des moyens réglables permettant de modifier la position d'arrimage de la boîte (13), afin de régler la distance du capteur (8) de position aux aimants (9).

8. Système d'entretien prédictif de vanne suivant l'une quelconque des revendications précédentes,
**caractérisé en ce qu'**il comprend une plaquette principale, qui mémorise et traite des données qu'elle reçoit de la plaquette de capteur.

9. Système d'entretien prédictif de vanne suivant la revendication 8,
**caractérisé en ce que** la plaquette principale est protégée à l'intérieur d'une deuxième boîte (15), qui est jointe par des moyens amovibles à un supplément (6) du système, de manière à rendre possible de libérer la deuxième boîte (15) sans interférer avec quelque élément de la vanne que ce soit.

10. Système d'entretien prédictif de vanne suivant la revendication 8,
**caractérisé en ce qu'**il comprend une plaquette Ethernet connectée à la plaquette principale pour envoyer les données, qui en sont extraites.

11. Système d'entretien prédictif de vanne suivant l'une quelconque des revendications précédentes,
**caractérisé en ce qu'**il comprend une plaquette d'entrée/sortie ayant des entrées numériques et analogiques et des sorties numériques connectées à la plaquette principale.

12. Procédé pour effectuer un entretien prédictif de vanne, **caractérisé en ce qu'**il comprend les stades de :
- association d'au moins un capteur de couple à une broche (4) de vanne, de manière à détecter le couple nécessaire pour actionner la vanne et à fournir un signal électrique proportionnel au couple ;
- association d'au moins un capteur (8) de position à la broche (4) de la vanne, de manière à détecter à la fois le début et la fin des positions de déplacement de la broche (4), ainsi que leurs positions intermédiaires ;
- acquisition et enregistrement des signaux de position et de couple à partir d'un instant avant le début du déplacement, qui signale le début d'une manœuvre ;
- acquisition et enregistrement des signaux de position et de couple pendant la rotation de la vanne ;
- acquisition et enregistrement des signaux de position et de couple jusqu'à un instant après qu'un interrupteur de limite signale la fin de la manœuvre ; et
- une fois que la manœuvre s'est achevée, traitement des signaux obtenus et calcul de la position à tout moment donné sur la base des signaux des deux capteurs et du début et de la fin de l'état de déplacement,
dans lequel traiter le signal obtenu comprend corriger les variations que les mesures des capteurs de position (8) et de couple peuvent subir en raison de leurs valeurs extrêmes de température par un capteur de température connecté à la plaquette de capteur.

13. Procédé pour effectuer un entretien prédictif dans des vannes suivant la revendication 12,
**caractérisé en ce que** l'on envoie les données à un poste à distance pour analyse.

14. Procédé pour effectuer un entretien prédictif dans des vannes suivant l'une quelconque des revendications 12 ou 13, **caractérisé en ce que** le temps avant, pendant lequel les signaux de couple et de position sont acquis et enregistrés avant la manœuvre ou après la fin de la manœuvre, est suffisant pour assurer qu'un système enregistre à la fois le couple maximum et minimum une fois que la manœuvre est effectuée.

15. Procédé pour effectuer un entretien prédictif dans des vannes suivants l'une quelconque des revendications 12 à 14, **caractérisé en ce que** l'on produit un fichier pour chaque manœuvre, comprenant :
- identification de la vanne ;
- date et temps de la manœuvre ;
- type de manœuvre ; et
- données de couple-position.

16. Procédé pour effectuer un entretien prédictif dans des vannes suivant la revendication 15,
**caractérisé en ce que** l'on traite le fichier produit par logiciel, afin de :
- extraire la donnée de manœuvre pour chaque vanne d'une usine,
- mettre en mémoire ces données dans des bases de données différentes,
- afficher l'évolution dans le temps des courbes de couple et de position de chaque vanne, et
- analyser si l'évolution des courbes est correcte et, si ce n'est pas le cas, produire le signal d'alerte correspondant, afin de détecter un incident possible à venir.
